# EUROPÄISCHE PATENTSCHRIFT

(11) **EP 1 124 907 B1**
(45) Veröffentlichungstag und Bekanntmachung des Hinweises auf die Patenterteilung: **24.11.2004**
(21) Anmeldenummer: 99944583.6
(22) Anmeldetag: 02.09.1999
(51) Int. Cl.: C09D 7/06, C09D 5/02, B05D 7/00

(54) **ZWEISCHICHTLACKIERUNG AUS WÄSSRIGEM BASISLACK UND KLARLACK MIT VERBESSERTER KLARLACKBENETZUNGSGRENZE**
DOUBLE-LAYER VARNISH COMPRISING AN AQUEOUS BASE VARNISH AND CLEAR VARNISH WITH IMPROVED CLEAR VARNISH WETTING LIMIT
VERNISSAGE A DEUX COUCHES AVEC UN VERNIS DE BASE AQUEUX ET UN VERNIS CLAIR AYANT UNE LIMITE DE MOUILLAGE DE VERNIS CLAIR AMELIOREE

(30) Priorität: 14.09.1998 DE 19841976
(43) Veröffentlichungstag der Anmeldung: 22.08.2001
(73) Patentinhaber: E.I. DU PONT DE NEMOURS & COMPANY INCORPORATED, Wilmington, Delaware 19898 (US)
(72) Erfinder: BOSCH, Werner, D-42339 Wuppertal (DE); KRAUS VOM CLEFF, Oliver, D-42369 Wuppertal (DE); TASCHNER, Marco, D-45549 Sprockhövel (DE)
(74) Vertreter: Gille Hrabal Struck Neidlein Prop Roos
(86) Internationale Anmeldenummer: PCT/EP1999/006441
(87) Internationale Veröffentlichungsnummer: WO 2000/015722

(56) Entgegenhaltungen:
- EP-A- 0 281 936
- WO-A-94/04616
- DE-A- 3 120 286
- GB-A- 1 451 986
- PATENT ABSTRACTS OF JAPAN vol. 1995, no. 04, 31. Mai 1995 (1995-05-31) & JP 07 011185 A (TOYO INK MFG CO LTD), 13. Januar 1995 (1995-01-13)

## Beschreibung

Die Erfindung betrifft die Herstellung von Zweischichtlackierungen vom Basislack/Klarlack-Typ mit verbesserter Klarlackbenetzungsgrenze unter Verwendung bestimmter Additive in wäßrigen Basislacken, sowie hierfür geeignete wäßrige Basislacke. Sie betrifft auch ein Verfahren zur Herstellung der Zweischichtlackierungen unter Verwendung der wäßrigen Basislacke.

Aus EP-A-0 281 936 sind Wasserbasislacke bekannt, die unter Verwendung von Polypropylenoxid als Schutzkolloid hergestellte Schichtsilikatdispersionen enthalten. Die Polypropylenoxide können Ethylenoxideinheiten in statistisch verteilter Form oder in Form eines Blockcopolymeraufbaus enthalten. Im Fall der blockcopolymeren Polypropylenoxide sind solche mit einem mittleren Molekulargewicht von 500 bis 8000 geeignet. Bevorzugt sind jedoch Polypropylenoxidhomopolymere mit einem mittleren Molekulargewicht von 400 bis 1000, ganz besonders bevorzugt etwa 900.

Insbesondere im Bereich der Automobilserienlackierung erfolgt die Herstellung dekorativer Zweischichtdecklackierungen in zunehmendem Maße durch Applikation einer farb- und/oder effektgebenden Basislackschicht aus einem wäßrigen Basislack und einer schützenden Klarlackschicht. Der Klarlack muß dabei in einer durch die Klarlackbenetzungsgrenze vorgegebenen Mindestschichtdicke appliziert werden, um die Ausbildung eines geschlossenen Klarlackfilms auf der gesamten Substratoberfläche zu gewährleisten. Diese Mindestschichtdicke wird in der Praxis sogar überschritten, beispielsweise um die Ausbildung eines geschlossenen Klarlackfilms an von den Applikationsgeräten nur schlecht erreichbaren Stellen des Substrats, wie beispielsweise Sicken, Kanten oder Vertiefungen einer Automobilkarosserie, sicherzustellen. Dies führt nicht nur zu einem unerwünscht hohen Klarlackverbrauch, sondern je nach Natur des Klarlacks treten dabei oftmals auch Probleme mit der Ablaufsicherheit des Klarlacks an senkrechten Flächen auf, wenn die Klarlackschichtdicke zu groß wird. Aus EP-A-0 663 428 ist es bekannt niedermolekulare Poly-C4-olefine als Additive in Wasserbasislacken einzusetzen, um die Benetzungsgrenze des anschließend applizierten Klarlacks abzusenken. Eine stabile Einarbeitung der Poly-C4-olefine in Wasserbasislacke erfordert ein intensives Vermischen von Poly-C4-olefin mit wäßrigem Basislack oder das Poly-C4-olefin wird bei der Herstellung des Wasserbasislacks zweckmäßigerweise in einem Stadium noch vor der Zugabe wesentlicher Wassermengen zugegeben.

Aufgabe der Erfindung ist es, Wasserbasislacke für die anschließende Überlackierung mit Klarlackschichten bereitzustellen, die es ebenfalls erlauben die Klarlackbenetzungsgrenzen abzusenken und die betreffende Klarlackschicht in möglichst niedriger Schichtdicke aufzubringen und die Prozeßsicherheit bei der Klarlackbeschichtung zu erhöhen. Dabei sollen die Wasserbasislacke einfach und stabil herstellbar sein.

Es hat sich gezeigt, daß diese Aufgabe gelöst werden kann durch die Verwendung von einem oder mehreren gegebenenfalls teilweise oder vollständig mit C1-C4-Alkanolen veretherten Polyethylen- und/oder -propylenglykolen und/oder -polyolen mit einer mittleren Molekularmasse von über 1000 bis 8000 als Additive in Wasserbasislacken. Einen Gegenstand der Erfindung bildet daher die Verwendung von linearen und/oder verzweigten Polyethylenoxidhomopolymeren, Polypropylenoxidhomopolymeren und/oder Polyethylen/propylen-oxid-Copolymeren mit statistisch verteilten Ethylenoxid- und Propylenoxideinheiten, wobei die terminalen Hydroxylgruppen der Homo- bzw. Copolymeren unverethert oder teilweise oder vollständig mit C1-C4-Alkanolen verethert sein können, mit einer mittleren Molekularmasse von über 1000 bis 8000 zur Verringerung der Klarlackbenetzungsgrenze bei der Zweischichtlackierung mit wäßrigem Basislack und Klarlack.
Unter den genannten mittleren Molmassen sollen hier die errechneten mittleren Molmassen verstanden werden.

Bei der Verwendung werden die linearen und/oder verzweigten Polyethylenoxidhomopolymeren, Polypropylenoxidhomopolymeren und/oder Polyethylen/propylen-oxid-Copolymeren dem wäßrigen Basislack vor seiner Applikaltion zugesetzt, bevorzugt in einem Mengenanteil von 0,5 bis 15 Gew.-%, bezogen auf seinen Festkörpergehalt.

Einen weiteren Gegenstand der Erfindung bildet eine wäßrige Basislackzusammensetzung, enthaltend jeweils ein oder mehrere Bindemittel und Pigmente sowie gegebenenfalls Füllstoffe, Vernetzer, organische Lösemittel und/oder lackübliche Additive, die dadurch gekennzeichnet ist, daß sie zusätzlich ein oder mehrere lineare und/oder verzweigte Polyethylenoxidhomopolymere, Polypropylenoxidhomopolymere und/oder Polyethylen/propylen-oxid-Copolymere mit statistisch verteilten Ethylenoxid- und Propylenoxideinheiten, wobei die terminalen Hydroxylgruppen der Homo- bzw. Copolymeren unverethert oder teilweise oder vollständig mit C1-C4-Alkanolen verethert sein können, mit einer mittleren Molekularmasse von über 1000 bis 8000 in einem Mengenanteil von 0,5 bis 15 Gew.-%, bezogen auf ihren Festkörpergehalt, enthält.

Die erfindungsgemäß modifizierten farb- und/oder effektgebenden Wasserbasislacke können bei der Herstellung von Mehrschichtlackierungen, insbesondere dekorativen Basislack/Klarlack-Zweischichtlackierungen Verwendung finden. Die Wasserbasislacke enthalten in geeigneter Weise ionisch oder nicht-ionisch stabilisierte Bindemittelsysteme. Diese sind bevorzugt anionisch und/oder nicht-ionisch stabilisiert. Anionische Stabilisierung wird bevorzugt erreicht durch zumindest partiell neutralisierte Carboxylgruppen im Bindemittel, während nicht-ionische Stabilisierung bevorzugt durch laterale oder terminale Polyethylenoxideinheiten im Bindemittel erreicht wird. Die Wasserbasislacke können physikalisch trocknender Natur sein oder unter Ausbildung kovalenter Bindungen vernetzbar sein. Bei den unter Ausbildung kovalenter Bindungen vernetzenden wäßrigen Basislacken kann es sich um selbst- oder fremdvernetzende Systeme handeln. Im letzteren Fall kann es sich um ein- oder mehrkomponentige Wasserbasislacke handeln.

Die erfindungsgemäßen Wasserbasislacke enthalten ein oder mehrere übliche filmbildende Bindemittel. Sie können, falls die Bindemittel nicht selbstvernetzend oder selbsttrocknend sind, gegebenenfalls auch Vernetzer enthalten. Sowohl die Bindemittel- als auch die gegebenenfalls enthaltene Vernetzerkomponente unterliegt keinerlei Beschränkung. Als filmbildende Bindemittel können beispielsweise übliche Polyester-, Polyurethan- und/oder Poly(meth)acrylatharze verwendet werden. Die Auswahl der gegebenenfalls enthaltenen Vernetzer ist unkritisch, sie richtet sich in dem Fachmann geläufiger Weise nach der Funktionalität der Bindemittel, das heißt die Vernetzer werden so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Carboxyl/Epoxid, Hydroxyl/Methylolether und/oder Methylol (Methylolether und/oder Methylol bevorzugt als vernetzungswirksame Gruppen von Aminoplastharzen), Hydroxyl/freies Isocyanat, Hydroxyl/blockiertes Isocyanat, (Meth)acryloyl/CH-acide Gruppe. Sofern miteinander verträglich können auch mehrere solcher komplementärer Funktionalitäten in einem Wasserbasislack nebeneinander vorliegen. Die gegebenenfalls in den Wasserbasislacken enthaltenen Vernetzer können einzeln oder im Gemisch vorliegen.

Die erfindungsgemäßen Wasserbasislacke enthalten farb- und/oder effektgebende Pigmente und gegebenenfalls Füllstoffe. Beispiele für farbgebende anorganische oder organische Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Schichtsilikate, Azopigmente, Phthalocyaninpigmente, Chinacridonpigmente, Pyrrolopyrrolpigmente, Perylenpigmente. Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer, Graphiteffektpigmente, plättchenförmiges Eisenoxid, plättchenförmige Kupferphthalocyaninpigmente.
Die Effektpigmente werden im allgemeinen in Form einer handelsüblichen wäßrigen oder nicht-wäßrigen Paste vorgelegt, gegebenenfalls mit bevorzugt wasserverdünnbaren organischen Lösemitteln und Additiven versetzt und danach mit wäßrigem Bindemittel unter Scheren vermischt. Pulverförmige Effektpigmente können zunächst mit bevorzugt wasserverdünnbaren organischen Lösemitteln und Additiven zu einer Paste verarbeitet werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Das Anreiben kann in üblichen, dem Fachmann bekannten Aggregaten erfolgen. Danach wird mit dem restlichen Anteil des wäßrigen Bindemittels oder des wäßrigen Pastenharzes zur fertigen Farbpigmentanreibung komplettiert.

Es ist erfindungswesentlich, daß die Wasserbasislacke die vorstehend definierten Polyethylenoxidhomo-, Polypropylenoxidhomo- und/oder Polyethylenoxid/propylenoxid-copolymeren enthalten. Diese können auch als gegebenenfalls teilweise oder vollständig mit C1-C4-Alkanolen veretherte Polyethylenglykole, Polypropylenglykole, Polyethylen/propylenglykole oder als entsprechende -polyole bezeichnet werden, sofern es sich im letzteren Falle um verzweigte Produkte handelt. In der folgenden Beschreibung wird zur Vereinfachung der Ausdruck "Polyethylen- und/oder - propylenglykole und/oder -polyole" gewählt. Es handelt sich dabei um Polyethylenoxidhomopolymere oder Polypropylenoxidhomopolymere oder Polyethylen/propylenoxid-Copolymere mit statistisch verteilten Ethylenoxid- und Propylenoxideinheiten, wobei die terminalen Hydroxylgruppen der Homo- bzw. Copolymeren unverethert oder teilweise oder vollständig mit C1-C4-Alkanolen verethert sein können. Bevorzugt liegen die mittleren Molekularmassen der Homo- oder Copolymeren bei über 1000 bis 4000, insbesondere bei etwa 2000. Es kann sich um verzweigt aufgebaute Polyethylen- und/oder -propylenpolyole handeln, die hergestellt werden können durch ringöffnende Polymerisation von Ethylen- und/oder Propylenoxid unter Verwendung tri- oder höherfunktioneller Polyole als Startermolekül, wie beispielsweise Trimethylolpropan, Glyzerin, Pentaerythrit. Im Rahmen der Erfindung sind lineare Polyethylen- und/oder -propylenglykole bevorzugt. Diese können hergestellt werden durch ringöffnende Polymerisation von Ethylen- und/oder Propylenoxid unter Verwendung von Wasser oder Diolen als Startermolekül, wie beispielsweise bevorzugt Ethylenglykol bzw. Propylenglykol. Bevorzugt werden die homopolymeren Vertreter als Additive in den Wasserbasislacken eingesetzt, insbesondere die Polypropylenoxidhomopolymeren. Die terminalen Hydroxylgruppen der Polyethylen- und/oder -propylenglykole und/oder -polyole können mit C1-C4-Alkanolen, wie Methanol, Ethanol, n-Propanol, Isopropanol, 1-Butanol, 2-Butanol, Isobutanol teilweise oder vollständig verethert sein, bevorzugt sind jedoch die unveretherten hydroxyfunktionellen Polyetherverbindungen.

Die Polyethylen- und/oder -propylenglykole und/oder -polyole werden in einem Mengenanteil von 0,5 bis 15 Gew.-%, bevorzugt 1 bis 10 Gew.-%, bezogen auf den Festkörpergehalt der Wasserbasislacke eingesetzt.

Die Einarbeitung der Polyethylen- und/oder -propylenglykole und/oder -polyole kann in jedem Stadium der Herstellung der Wasserbasislacke erfolgen, beispielsweise auch erst als Zusatz zum an sich fertigen Wasserbasislack, beispielsweise als nachträglich zugesetztes Korrekturmittel. Eine stabile Einarbeitung der Polyethylen- und/oder - propylenglykole und/oder -polyole gelingt ohne besonderen Aufwand beim Mischvorgang.

Die erfindungsgemäßen Wasserbasislacke können weitere lackübliche Additive in lacküblichen Mengen, beispielsweise zwischen 0,1 und 5 Gew.-%, bezogen auf ihren Festkörper, enthalten. Beispiele für solche weitere Additive sind Antischaummittel, Netzmittel, haftvermittelnde Substanzen, Katalysatoren, Verlaufsmittel, Antikratermittel, Lichtschutzmittel und Verdicker wie beispielsweise synthetische Polymere mit ionischen und/oder assoziativ wirkenden Gruppen wie Polyvinylalkohol, Poly(meth)acrylamid, Poly(meth)acrylsäure, Polyvinylpyrrolidon, hydrophob modifizierte ethoxylierte Polyurethane oder Polyacrylate, vernetzte oder unvernetzte Polymermikroteilchen.

Die erfindungsgemäßen Wasserbasislacke können lackübliche Lösemittel enthalten, beispielsweise in einem Mengenanteil von bevorzugt unter 20 Gew.-%, besonders bevorzugt unter 15 Gew.-%. Es handelt sich um übliche lacktechnische Lösemittel, diese können beispielsweise von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldi-C1-C6-alkylether, Dipropylenglykoldi-C1-C6-alkylether, Ethoxypropanol, Butylglykol; Glykole z.B. Ethylenglykol und/oder Propylenglykol, und deren Di- oder Trimere, N-Alkylpyrrolidone, wie z.B. N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte aliphatische C6 - C12-Kohlenwasserstoffe.

Die erfindungsgemäßen Wasserbasislacke besitzen beispielsweise Festkörpergehalte von 10 bis 50 Gew.-%, für Effektwasserbasislacke liegt er beispielsweise bevorzugt bei 15 bis 30 Gew.-%, für unifarbige Wasserbasislacke liegt er bevorzugt höher, beispielsweise bei 20 bis 45 Gew.-%. Das Gewichtsverhältnis von Pigment zu Bindemittel im Wasserbasislack beträgt beispielsweise zwischen 0,05 : 1 bis 3 : 1, für Effektwasserbasislacke liegt es beispielsweise bevorzugt bei 0,1 : 1 bis 0,6 : 1, für unifarbige Wasserbasislacke liegt es bevorzugt höher, beispielsweise bei 0,1 : 1 bis 2,5 : 1, jeweils bezogen auf das Festkörpergewicht. Bei der Berechnung des Verhältnisses von Pigment zu Bindemittel wird die Summe der Gewichtsanteile von farbgebenden Pigmenten, Effektpigmenten und Füllstoffen in Beziehung gesetzt zur Summe der Gewichtsanteile von festem Bindemittel, festem Pastenharz und festem Vernetzer im fertigen Wasserbasislack.

Die erfindungsgemäßen wäßrigen Basislacke eignen sich zur Herstellung von Mehrschichtlackierungen, insbesondere farb- und/oder effektgebenden Zweischichtlackierungen auf dem Kraftfahrzeugsektor. Sie sind geeignet für die Fahrzeugerstlackierung und -reparaturlackierung, sie können jedoch auch in anderen Bereichen, z.B. der Kunststnfflackierung, insbesondere der Fahrzeugteilelackierung, eingesetzt werden.

Die Erfindung betrifft daher auch ein Verfahren zur Herstellung von Zweischichtlackierungen durch Auftrag eines erfindungsgemäßen Wasserbasislacks und eines Klarlacks. Die erfindungsgemäßen Wasserbasislacke können dabei auf verschiedenste Arten von Substraten aufgebracht werden. Im allgemeinen handelt es sich um metallische oder Kunststoff-Untergründe. Diese sind häufig vorbeschichtet, d.h.Kunststoffsubstrate können z.B. mit einer Kunststoffgrundierung versehen sein, metallische Substrate besitzen im allgemeinen eine beispielsweise elektrophoretisch aufgebrachte Grundierung und gegebenenfalls zusätzlich eine oder mehrere weitere Lackschichten, wie z.B. eine Füllerschicht. Bevorzugt werden die erfindungsgemäßen Wasserbasislacke durch Spritzen in einer Trockenschichtdicke von 8 bis 50 µm appliziert, für Effektwasserbasislacke liegt die Trockenschichtdicke beispielsweise bevorzugt bei 10 bis 25 µm, für unifarbige Wasserbasislacke liegt sie bevorzugt höher, beispielsweise bei 10 bis 40 µm. Die Applikation erfolgt bevorzugt im Naß-in-Naß-Verfahren, d.h.nach einer Ablüftphase, z.B. bei 20 bis 80°C, werden die Wasserbasislackschichten mit einem üblichen Klarlack in einer Trockenschichtdicke von bevorzugt 30 bis 60 µm überlackiert und gemeinsam mit diesem bei Temperaturen von beispielsweise 20 bis 150°C getrocknet oder vernetzt. Die Trocknungsbedingungen der Zweischichtlackierung aus Wasserbasislack und Klarlack richten sich nach dem verwendeten Klarlacksystem. Für Reparaturzwecke sind beispielsweise Temperaturen von 20 bis 80°C bevorzugt. Für Zwecke der Serienlackierung sind Temperaturen über 100°C, beispielsweise über 110°C bevorzugt. Die im Stand der Technik manchmal beobachtete Bildung eines hauchartigen, milchigen Belags auf der Klarlackoberfläche kann bei Verwendung der erfindungsgemäßen Wasserbasislacke hergestellten Mehrschichtlaclderungen auch im Falle dunkler Farbtöne nicht beobachtet werden.

Als Klarlack sind grundsätzlich alle bekannten Klarlacke oder transparent pigmentierten Überzugsmittel geeignet. Hierbei können sowohl lösungsmittelhaltige Einkomponenten(lK)- oder Zweikomponenten(2K)-Klarlacke, wasserverdünnbare 1K-oder 2K-Klarlacke, Pulverklarlacke oder wäßrige Pulverklarlackslurries eingesetzt werden. Bevorzugt werden 2K-Polyurethanklarlacke zur Überlackierung aus erfindungsgemäßen Wasserbasislacken erstellter Basislackschichten eingesetzt.

Durch die erfindungsgemäße Verwendung der Polyethylen- und/oder -propylenglykole und/oder -polyole in an sich bekannten farb- und/oder effektgebenden Wasserbasislacken des Standes der Technik gelingt es, die Benetzungsgrenzen der auf aus diesen erstellten Basislackschichten applizierten Klarlacküberzugsmittel abzusenken. Ein weiterer Effekt der erfindungsgemäßen Verwendung der Polyethylenund/oder -propylenglykole und/oder -polyole in Wasserbasislacken besteht in der Erhöhung ihrer Ablaufgrenze, was beispielsweise bei Wasserbasislacken mit solchen Farbtönen von Bedeutung sein kann, die ein geringes Deckvermögen aufweisen, oder bei Wasserbasislacken mit erhöhter Ablaufneigung, beispielsweise hochpigmentierte Wasserbasislacke.

### Beispiel 1 (Herstellung einer uniroten Mehrschichtlackierung, Vergleich)

### a) (Herstellung eines uniroten Wasserbasislacks)

Unter dem Dissolver werden 10 Teile einer 40 gewichtsprozentigen wäßrigen acrylierten Polyesterdispersion, 40 Teile einer käuflichen Polyesterurethandispersion (Festkörper 42 Gew.-%) und 8 Teile deionisiertes Wasser vermischt. Anschließend werden 6,5 Teile eines mit Dimethylethanolamin neutralisierten sauren Acrylatverdickers, 2 Teile Netzmittel, 3 Teile Butylglykol und 2 Teile N-Methylpyrrolidon homogen eingerührt. Es werden 24,5 Teile einer wäßrigen roten Pigmentpaste (Pigment/Bindemittel-Gewichtsverhältnis 2,2 : 1, Festkörpergehalt 43 Gew.-%) zugemischt. Anschließend wird mit 4 Teilen deionisiertem Wasser verdünnt. Man erhält einen uniroten Wasserbasislack mit einer Ablaufgrenze von 24 µm.

### b) Herstellung der Mehrschichtlackierung

Mit in der Automobilserienlackierung verwendetem handelsüblichen kathodisch abscheidbarem Elektrotauchlack (KTL, 18 µm Trockenschichtdicke) und handelsüblichem Füller (35 µm) vorbeschichtete Karosseriebleche (30 60 cm) werden in 40 µm Trockenschichtdicke mit dem uniroten Wasserbasislack aus Beispiel 1a) elektrostatisch lackiert. Nach 5 Minuten Ablüften bei 80°C wird eine keilförmige Klarlackschicht aus einem handelsüblichen Zweikomponenten-PU-Klarlack in einer maximalen Trockenschichtdicke von 50 µm durch Spritzauftrag überlackiert (Keil in Längsrichtung des Prüfblechs). Nach 5 min. Ablüften bei Raumtemperatur wird 30 Minuten bei 130°C (Objekttemperatur) eingebrannt. Dabei befand sich das Prüfblech in Längsrichtung in senkrechter Position. Die visuell wahrnehmbare Klarlackbenetzungsgrenze beträgt 23 µm.

### Beispiel 2 (Herstellung einer uniroten Mehrschichtlackierung, erfindungsgemäß)

### a) Herstellung eines uniroten Wasserbasislacks

99 Teile des uniroten Wasserbasislacks aus Beispiel 1a) werden mit 1 Teil Polypropylenglykol (mittlere Molekularmasse 2000) vermischt. Die Ablaufgrenze des Wasserbasislacks beträgt 27 µm.

### b) Herstellung der Mehrschichtlackierung

Beispiel 1b) wird mit dem uniroten Wasserbasislack aus Beispiel 2a) wiederholt. Die visuell wahrnehmbare Klarlackbenetzungsgrenze beträgt 13 µm.

## Patentansprüche

1. Verfahren zur Herstellung einer Mehrschichtlackierung von Kraftfahrzeugen durch Spritzauftrag einer Basislackschicht und anschließend einer Klarlackschicht auf ein gegebenenfalls vorbeschichtetes Kraftfahrzeugsubstrat, **dadurch gekennzeichnet, daß** man zur Erstellung der Basislackschicht eine wäßrigen Basislackzusammensetzung verwendet, die jeweils ein oder mehrere Bindemittel und Pigmente sowie gegebenenfalls Füllstoffe, Vernetzer, organische Lösemittel und/oder lackübliche Additive und zusätzlich ein oder mehrere lineare und/oder verzweigte Polyethylenoxidhomopolymere, Polypropylenoxidhomopolymere und/oder Polyethylen/propylen-oxid-Copolymere mit statistisch verteilten Ethylenoxid- und Propylenoxideinheiten, wobei die terminalen Hydroxylgruppen der Homo- bzw. Copolymeren unverethert oder teilweise oder vollständig mit C1-C4-Alkanolen verethert sein können, mit einer mittleren Molekularmasse von über 1000 bis 8000 in einem Mengenanteil von 0,5 bis 15 Gew.-%, bezogen auf ihren Festkörpergehalt, enthält.

2. Mit einer Mehrschichtlackierung versehenes Kraftfahrzeug, erhalten nach dem Verfahren von Anspruch 1.

3. Verwendung von linearen und/oder verzweigten Polyethylenoxidhomopolymeren, Polypropylenoxidhomopolymeren und/oder Polyethylen/propylen-oxid-Copolymeren mit statistisch verteilten Ethylenoxid- und Propylenoxideinheiten, wobei die terminalen Hydroxylgruppen der Homo- bzw. Copolymeren unverethert oder teilweise oder vollständig mit C1-C4-Alkanolen verethert sein können, mit einer mittleren Molekularmasse von über 1000 bis 8000 zur Verringerung der Klarlackbenetzungsgrenze bei der Zweischichtlackierung mit einem System aus wäßrigem Basislack und Klarlack.

4. Verwendung nach Anspruch 3, **dadurch gekennzeichnet, daß** die linearen und/oder verzweigten Polyethylenoxidhomopolymeren, Polypropylenoxidhomopolymeren und/oder Polyethylen/propylen-oxid-Copolymeren dem wäßrigen Basislack vor seiner Applikation zugesetzt werden.

5. Verwendung nach Anspruch 4, **dadurch gekennzeichnet, daß** die linearen und/oder verzweigten Polyethylenoxidhomopolymeren, Polypropylenoxidhomopolymeren und/oder Polyethylen/propylen-oxid-Copolymeren dem wäßrigen Basislack vor seiner Applikation in einem Mengenanteil von 0,5 bis 15 Gew.-%, bezogen auf seinen Festkörpergehalt, zugesetzt werden.

## Claims

1. Process for the production of a multilayer lacquer for motor vehicles by spray application of a base lacquer coat and then of a clear lacquer coat onto an optionally precoated motor vehicle substrate, **characterised in that** an aqueous base lacquer composition is used to produce the base lacquer coat, which contains one or more binders and pigments and optionally fillers, crosslinkers, organic solvents and/or conventional lacquer additives and additionally one or more linear and/or branched polyethylene oxide homopolymers, polypropylene oxide homopolymers and/or polyethylene/polypropylene oxide copolymers having randomly distributed ethylene oxide and propylene oxide units, wherein the terminal hydroxyl groups in the homopolymers or copolymers can be unetherified or partially or fully etherified with C1 to C4 alkanols, having an average molecular weight of over 1000 to 8000, in a proportion of 0.5 to 15 wt.% relative to their solids content.

2. Motor vehicle coated with a multilayer lacquer, obtained by the process according to claim 1.

3. Use of linear and/or branched polyethylene oxide homopolymers, polypropylene oxide homopolymers and/or polyethylene/polypropylene oxide copolymers having randomly distributed ethylene oxide and propylene oxide units, wherein the terminal hydroxyl groups in the homopolymers or copolymers can be unetherified or partially or fully etherified with C1 to C4 alkanols, having an average molecular weight of over 1000 to 8000, to reduce the clear lacquer wetting limit in two-layer lacquering with a system comprising an aqueous base lacquer and a clear lacquer.

4. Use according to claim 3, **characterised in that** the linear and/or branched polyethylene oxide homopolymers, polypropylene oxide homopolymers and/or polyethylene/polypropylene oxide copolymers are added to the aqueous base lacquer before it is applied.

5. Use according to claim 4, **characterised in that** the linear and/or branched polyethylene oxide homopolymers, polypropylene oxide homopolymers and/or polyethylene/polypropylene oxide copolymers are added to the aqueous base lacquer before it is applied, in a proportion of 0.5 to 15 wt.% relative to its solids content.

## Revendications

1. Procédé de préparation d'un vernissage multicouche de véhicules automobiles par pulvérisation d'une couche de vernis de base et ensuite, d'une couche de vernis transparent sur un substrat de véhicule automobile, le cas échéant prérevêtu, **caractérisé en ce que** l'on utilise pour la préparation de la couche de vernis de base, une composition aqueuse de vernis de base, qui contient chaque fois, un ou plusieurs liants et pigments, ainsi que le cas échéant, des charges, agents de réticulation, solvants organiques et/ou additifs de vernis, et en outre, un ou plusieurs homopolymères de poly(oxyde d'éthylène), homopolymères de poly(oxyde de propylène) et/ou copolymères de poly(oxyde d'éthylène/propylène) avec les unités oxyde d'éthylène et oxyde de propylène distribuées de manière statistique, linéaires et/ou ramifiés, où les radicaux hydroxyle terminaux des homo- ou selon le cas copolymères peuvent être non éthérifiés ou partiellement ou complètement éthérifiés avec des alcanols en C1-C4, avec une masse moléculaire moyenne de plus de 1000 à 8000, en une quantité allant de 0,5 à 15% en poids, sur la base de sa teneur en matières solides.

2. Véhicule automobile muni d'un vernissage multicouche, obtenu selon le procédé de la revendication 1.

3. Utilisation d'homopolymères de poly(oxyde d'éthylène), d'homopolymères de poly(oxyde de propylène) et/ou de copolymères de poly(oxyde d'éthylène/propylène) avec les unités oxyde d'éthylène et oxyde de propylène distribuées de manière statistique, linéaires et/ou ramifiés, où les radicaux hydroxyle terminaux des homo- ou selon le cas copolymères peuvent être non éthérifiés ou partiellement ou complètement éthérifiés avec des alcanols en C1-C4, avec une masse moléculaire moyenne de plus de 1000 à 8000, pour diminuer la limite de mouillage du vernis transparent, pour le vernissage à deux couches avec un système de vernis de base aqueux et de vernis transparent.

4. Utilisation selon la revendication 3, **caractérisée en ce que** les homopolymères de poly(oxyde d'éthylène), homopolymères de poly(oxyde de propylène) et/ou copolymères de poly(oxyde d'éthylène/propylène) linéaires et/ou ramifiés, du vernis de base aqueux sont ajoutés avant son application.

5. Utilisation selon la revendication 4, **caractérisée en ce que** les homopolymères de poly(oxyde d'éthylène), homopolymères de poly(oxyde de propylène) et/ou copolymères de poly(oxyde d'éthylène/propylène) linéaires et/ou ramifiés, du vernis de base aqueux sont ajoutés avant son application, en une quantité allant de 0,5 à 15% en poids, sur la base de sa teneur en matière solide.
